(19) Europäisches Patentamt
European Patent Office
Office européen des brevets

(11) EP 2 579 221 A1

(12) EUROPEAN PATENT APPLICATION

(43) Date of publication:
10.04.2013 Bulletin 2013/15

(51) Int Cl.:
G07C 9/00 (2006.01)    H04L 9/32 (2006.01)
G06F 21/32 (2013.01)

(21) Application number: 12180425.6

(22) Date of filing: 14.08.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 06.10.2011 JP 2011221704

(71) Applicant: Hitachi Ltd.
Tokyo 100-8280 (JP)

(72) Inventors:
• Takahashi, Kenta
Chiyoda-ku,, Tokyo 100-8220, (JP)
• Isobe, Yoshiaki
Chiyoda-ku,, Tokyo 100-8220, (JP)

(74) Representative: Calderbank, Thomas Roger et al
Mewburn Ellis LLP
33 Gutter Lane
London EC2V 8AS (GB)

(54) **Template delivery type cancelable biometric authentication system and method therefor**

(57) In a biometric authentication system, a delivery server includes a parameter conversion unit which generates, by converting the parameter, a parameter for delivery, a template conversion unit which generates, by converting the template, a template for delivery, and a delivery unit which delivers the template for delivery and the parameter for delivery to one of the client terminal and an authentication device; the authentication device includes a sensor which obtains biometric information on a registered user, a feature quantity obtaining unit which obtains a feature quantity from the biometric information, and a feature quantity conversion unit which generates, by converting the feature quantity using the parameter for delivery, a converted feature quantity; and the client terminal includes a match determination unit which determines, by comparing the converted feature quantity with the template for delivery, whether or not the converted feature quantity and the template for delivery match.

FIG. 1  FIRST EXAMPLE  SYSTEM CONFIGURATION

**Description**

The present invention relates to a biometric authentication system for authenticating individuals based on biometric information on individuals and a method therefor.

Biometric authentication for authenticating individuals based on biometric information on the individuals is advantageous over authentication based on cards and passwords in that biometric information is free of such risks as being lost, forgotten or stolen, so that it can realize highly convenient and impersonation-resistant individual authentication. In a general biometric authentication system, in initially registering a user, biometric information on the user is obtained, information called a feature quantity is extracted from the biometric information, and the extracted feature quantity is registered. The information thus registered is stored as a template. Subsequently, when authenticating the user, biometric information is obtained again from the user, a feature quantity is extracted from the biometric information, and the feature quantity is compared with the template to determine whether the user is authentic.

In a biometric authentication system used by plural users, there are cases where, for centralized template maintenance and management, templates are gathered and stored in a single or a small number of servers. Biometric authentication systems operated in such a manner are divided into two models, i.e. server authentication models and template delivery type authentication models. In a server authentication model, authentication processing is performed also in a centralized manner on the server side. In a template delivery type authentication model, authentication processing is performed at respective client terminals using templates delivered in advance to the client terminals, respectively. The latter model has advantages in that the load of authentication processing can be distributed over plural client terminals and in that, once templates are delivered to individual client terminals, authentication can be performed even in an off-line environment where network communication is not performable. This model can therefore be applied to, for example, door management requiring availability to be secured even in a mobile environment or at the time of a network failure.

Since templates provide information capable of identifying individuals, they require to be strictly managed as private information. In addition, a single type of biometric information obtainable from an individual is limited in number (for example, fingerprints are available only from ten fingers). Templates, therefore, cannot be changed so easily as passwords and cryptographic keys. If a template is leaked causing a risk of being counterfeited, the template can no longer be used for biometric authentication. If the same biometric information is registered in plural biometric authentication systems, the plural biometric authentication systems are also threatened. In a template delivery type authentication model, in particular, the risk of templates being leaked from client terminals poses a serious problem.

To address the problem, a cancelable biometrics technique has been proposed in which a feature quantity extracted from biometric information is registered and used for matching in a state of being protected by special encryption. To be more concrete, when a feature quantity is to be registered, the feature quantity is converted (i.e. encrypted) using a secret conversion parameter (i.e. an encryption key) and the encrypted feature quantity is registered as a template. For authentication, the feature quantity to be authenticated is converted using the same conversion parameter as the one used for registration and the feature quantity converted for authentication is compared, without being decrypted, with the template. This technique allows a device to perform authentication processing to determine, without knowing the original feature quantity before being converted, whether or not the feature quantity and the template match. This greatly reduces the risk of the original feature quantity from being leaked. Even in cases where a template is leaked, security can be maintained by generating a new template using a different parameter and registering it. Furthermore, in cases where the same biometric information is used in different systems, different templates generated using different parameters can be registered for the different systems, respectively. In this way, even if, among the different templates, one registered for one of the different systems is leaked, the security of the other systems is not affected.

In Japanese Patent Laid-Open No. 2010-146245, a method of realizing cancelable biometrics of a server authentication model is disclosed. How to concretely realize an algorithm for feature quantity conversion and matching in cancelable biometrics depends on the kind of biometric information and the type of feature quantity. For example, how to realize cancelable fingerprint authentication is described in each of U.S. Patent No. 6836554 and Japanese Patent Laid-Open No. 2006-158851. Also, how to realize cancelable iris authentication is described in two documents: M. Braithwaite, U. Cahn von Seelen, J. Cambier, J. Daugman, R. Glass, R. Moore, and I. Scott "Application-specific biometric templates," in Auto ID02, pp. 167-171, 2002; and Haruki Ota, Shinsaku Kiyomoto, and Toshiaki Tanaka "Proposal of an Iris Identification Scheme Hiding Iris Codes," Journal of Information Processing Society of Japan, Vol. 45, No. 8, pp. 1845-1855, 2004. In another document, Shinji Hirata, et al., "A Proposal of Cancelable Biometrics for Image Matching based biometrics," Technical report of Institute of Electronics, Information and Communication Engineers (IEICE), 2006-07-ISEC-SITE-IPSJ-CSEC, another biometric authentication technique is described in which two feature quantities represented by two images each represented by a two-dimensional array of data, brightness values (integers) in particular, are compared and whether or not they match is determined based on a maximum correlation value between them with positional shifting between the two images taken into consideration.

To securely realize cancelable biometrics, it is necessary to perform authentication processing while keeping parameters and templates managed dispersedly so as not to allow them to be leaked at a same time. Hence, the existing cancelable biometrics like the one disclosed in Japanese Patent Laid-Open No. 2010-146245 are based on a server authentication model.

As described above, however, when mobile applications requiring authentication processing to be performable where a network environment is not secured or when applications to door management required to be available even at a time of network failure are taken into consideration, cancelable biometrics based on a template delivery model is desirable. Realizing cancelable biometrics based on a template delivery model requires parameters and templates to be delivered to the client side. This poses a problem, i.e. a high risk of parameters and templates being leaked together allowing original feature quantities to be restored.

It is a preferred aim of the present invention to provide secure cancelable biometrics based on a template delivery type model with a reduced risk of templates and parameters being leaked together.

The present invention provides a biometric authentication system having: a delivery server which stores a template generated by converting, using a predetermined parameter, a feature quantity of biometric information on a registered user and the parameter; a client terminal which authenticates the user coupled to the delivery server via a network; and an authentication device which is coupled to the client terminal and obtains, in authentication processing, biometric information on the user. In the biometric authentication system, the delivery server includes a parameter conversion unit which generates, by converting the parameter, a parameter for delivery, a template conversion unit which generates, by converting the template, a template for delivery, and a delivery unit which delivers the template for delivery and the parameter for delivery to one of the client terminal and the authentication device; the authentication device includes a sensor which obtains the biometric information on the user, a feature quantity obtaining unit which obtains a feature quantity from the biometric information, and a feature quantity conversion unit which generates, by converting the feature quantity using the parameter for delivery, a converted feature quantity; and the client terminal includes a match determination unit which determines, by comparing the converted feature quantity with the template for delivery, whether or not the converted feature quantity and the template for delivery match.

The present invention provides a method of biometric authentication used in the above biometric authentication system.

The present invention makes it possible to realize secure cancelable biometrics of a template delivery type model with a reduced risk of templates and parameters being leaked together.

In the drawings:

FIG. 1 is a block diagram showing a functional configuration of an example of the present invention;
FIG. 2 is a flowchart of registration processing according to the example of the present invention;
FIG. 3 is a flowchart of delivery processing according to the example of the present invention;
FIG. 4 is a flowchart of authentication processing according to the example of the present invention;
FIG. 5 is a block diagram showing a hardware configuration of a terminal/server according to the example of the present invention; and
FIG. 6 is a block diagram showing a hardware configuration of an authentication device according to the example of the present invention.

[Frist Example]

An embodiment of a template delivery type cancelable biometric authentication system and a method therefor according to the present invention will be described in detail below with reference to the accompanying drawings.

In the cancelable biometric authentication system of the present example, templates being managed together at a template management server are delivered to client terminals allowing users to log in to the client terminals. Assume, for example, client terminals (for example, laptop computers) and/or authentication devices (for example, mobile finger vein authentication devices) are shared by employees of an enterprise, and an arbitrary one of such client terminals or authentication devices is lent to an employee (user) going on a business trip. In such a case, delivering a template and a parameter associated with the particular user to the client terminal or authentication device to be lent to the user makes cancelable biometric authentication of the user possible even in an offline environment (where network communication is not performable) while the user is on the business trip.

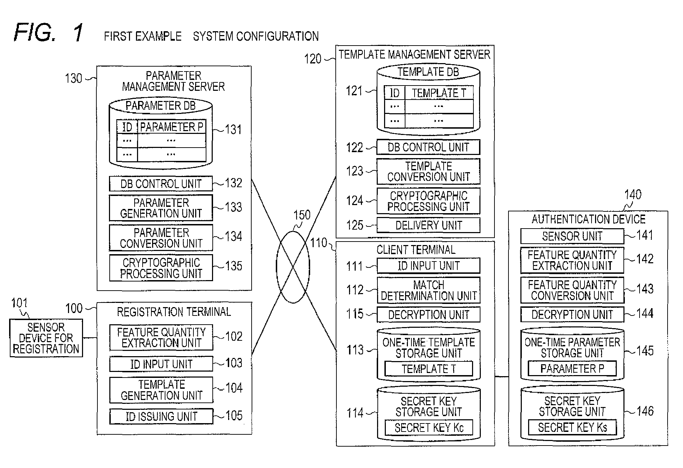

FIG. 1 shows the system configuration of the biometric authentication system of the present example. The biometric authentication system of the present example includes a registration terminal 100 which, when registering biometric information on a user, obtains biometric information to be registered and generates a template, a template management server 120 which manages templates, a parameter management server 130 which manages parameters (equivalent to cryptography keys) used, in cancelable biometric authentication, to convert (encrypt) biometric information to be registered, a client terminal 110 used by users to be authenticated, a network 150 to which such system components are coupled, and an authentication device 140 which is coupled to the client terminal 110, obtains biometric information on a user to be authenticated and converts the obtained biometric information into a feature quantity. Note that, though not shown, these devices included in the biometric authentication system are each assumed to have a communication unit used to mutually exchange various data.

The registration terminal 100 is coupled to a sensor device for registration (hereinafter referred to simply as a "sensor") 101 which obtains biometric information to be registered, for example, fingerprints and vein patterns and includes a feature quantity extraction unit 102 which extracts feature quantities for registration from the obtained biometric information for registration about registered users, an ID input unit 103 which accepts input of user IDs, a template generation unit 104 which generates converted feature quantities for registration (hereinafter referred to as "templates") by converting the feature quantities for registration using parameters received from the parameter management server 130, and an ID issuing unit 105 which issues user IDs.

The template management server 120 includes a template DB 121 which manages the user IDs and corresponding templates, a DB control unit 122 which controls DB searches and data registration/updating, a template conversion unit 123 which generates one-time templates by converting templates, a cryptographic processing unit 124 which encrypts the one-time templates, and a delivery unit 125 which delivers the encrypted one-time templates and the encrypted one-time parameters being described later.

The parameter management server 130 includes a parameter DB 131 which manages the user IDs and corresponding parameters, a DB control unit 132, a parameter generation unit 133, a parameter conversion unit 134 which generates one-time parameters by converting parameters, and a cryptographic processing unit 135 which encrypts the one-time parameters.

The authentication device 140 includes a secret key storage unit 146 which stores secret keys Ks, a decryption unit 144 which decrypts, using the secret keys Ks, the encrypted one-time parameters delivered from the template management server 120 via a client terminal, a one-time parameter storage unit 145 which stores the one-time parameters, a sensor unit 141 which obtains biometric information for authentication, a feature quantity extraction unit 142, and a feature quantity conversion unit 143 which converts, using the one-time parameters, the feature quantities for authentication into converted feature quantities for authentication. Of these units, at least the feature quantity conversion unit 143, decryption unit 144, one-time parameter storage unit 145 and secret key storage unit 146 are mounted in an area protected from attacks from outside (for example, a tampering-resistant area) so as to prevent the one-time parameters from leaking.

The client terminal 110 includes an ID input unit 111 which accepts input of user IDs, a secret key storage unit 114 which stores secret keys Kc, a decryption unit 115 which decrypts the encrypted one-time templates delivered from the template management server 120 using the secret keys Kc, a one-time template storage unit 113 which stores the one-time templates, and a match determination unit 112 which calculates, by comparing a one-time template with a converted feature quantity for authentication received from the authentication device 140, the distance (or similarity) between them and determines whether they match (OK) or not (NG).

Note that the template management server 120 and the parameter management server 130 may be mounted on a same hardware device (delivery server). Also, in the processing being described below, all or part of the communications may be encrypted using, for example, SSL.

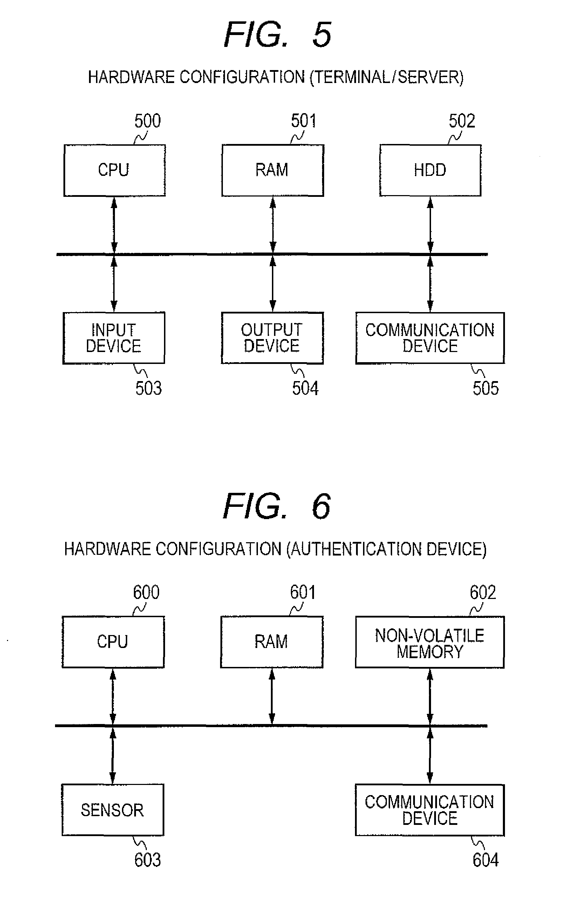

FIG. 5 shows a hardware configuration of the registration terminal 100, client terminal 110, authentication server 120 and parameter management server 130 according to the present example. As shown, these devices can each be configured with a CPU 500, a RAM 501, an HDD 502, an input device 503, an output device 504 and a communication device 505.

FIG. 6 shows a hardware configuration of the authentication device 140 according to the present example. As shown, the authentication device 140 can be configured with a CPU 600, a RAM 601, a non-volatile memory 602, a sensor 603, and a communication device 604.

In the following, the mathematical condition to be satisfied by feature quantity conversion function F and parameter P in the present example will be described. The conversion function F is defined as follows where Sx represents a feature quantity space and Sp represents a parameter space.

$$F: Sx \times Sp \to Sx$$

Condition to be satisfied: Parameter $R \in Sp$ exists with respect to two arbitrary parameters P and $Q \in Sp$, and the following equation is established with respect to arbitrary feature quantity $X \in Sx$.

$$F(F(X, P), Q) = F(X, R)$$

Namely, it is assumed that parameter R exists which equalizes a feature quantity (left part of the equation) obtained by converting X by successively applying parameters P and Q and a feature quantity (right part of the equation) obtained by converting X by applying parameter R only once. The parameter R is expressed as follows:

$$P + Q$$

Namely, parameter space Sp is closed under a binary operation +.

When parameters P and $Q \in Sp$ are fixed, and the following functions:

$$f(\cdot) \equiv F(\cdot, P)$$

$$g(\cdot) \equiv F(\cdot, Q)$$

are assumed to be functions $Sx \rightarrow Sx$, then P + Q can be regarded as a parameter corresponding to the following composite function:

$$f \bigcirc g(\bullet) \equiv f(g(\bullet))$$

The composite function satisfies the following associative law:

$$(f \bigcirc g) \bigcirc h = f \bigcirc (g \bigcirc h)$$

Hence, the following associative law is established with respect to arbitrary parameters P, Q, and $R \in Sp$:

$$(P+Q) + R = P + (Q + R)$$

This means that the parameter space Sp forms a semigroup with respect to the operation +.

The cancelable biometric authentication methods disclosed in U.S. Patent No. 6836554 and Japanese Patent Laid-Open No. 2006-158851 and those described in documents (M. Braithwaite, U. Cahn von Seelen, J. Cambier, J. Daugman, R. Glass, R. Moore, and I. Scott "Application-specific biometric templates," in Auto ID02, pp. 167-171, 2002; Haruki Ota, Shinsaku Kiyomoto, and Toshiaki Tanaka "Proposal of an Iris Identification Scheme Hiding Iris Codes," Journal of Information Processing Society of Japan, Vol. 45, No. 8, pp. 1845-1855, 2004; and Shinji Hirata, et al., "A Proposal of Cancelable Biometrics for Image Matching based biometrics," Technical report of Institute of Electronics, Information and Communication Engineers (IEICE), 2006-07-ISEC-SITE-IPSJ-CSEC) all satisfy the above condition. In the cancelable iris authentication method described in "Application-specific biometric templates" mentioned above, for example, Sx and Sp represent n-bit spaces (n being 2048, for example) and are defined by

$$F(X, P) := X (+) P$$

where (+) represents an exclusive OR.

At this time,

$$F ( F(X , P), Q) = (X (+) P) ( + ) Q = X(+)(P ( + )$$

$$Q)$$

Therefore, when

$$R = P+Q: = P (+) Q$$

is defined, the following equation is established:

$$F(F(X, P), Q) = F(X, R)$$

Thus, the cancelable iris authentication method satisfies the above condition.

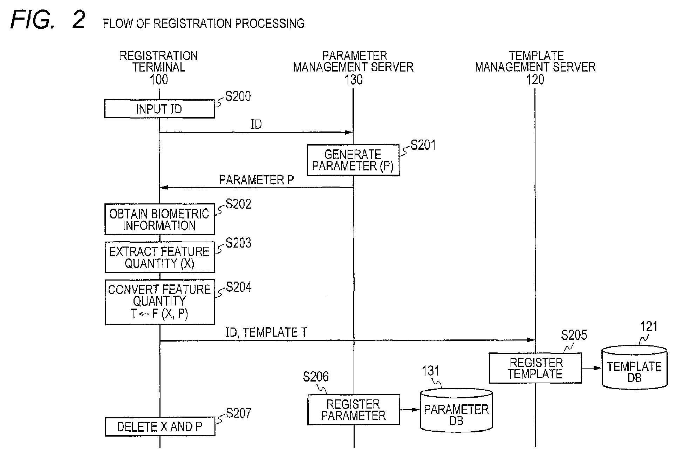

Next, the flow of registration processing according to the present example will be described with reference to FIG. 2. First, the ID issuing unit 105 determines an ID (for example, a number or a character string) which is not yet in use, issues the ID to a registered user and transmits the ID to the parameter management server 130 (S200). The parameter generation unit 133 randomly generates parameter $P \in Sp$ and transmits the generated parameter P and the ID to the registration terminal 100 (S201).

When the parameter P is received, the feature quantity extraction unit 102 of the registration terminal 100 obtains biometric information (for example, a fingerprint or vein image) for registration on the registered user via the sensor 101 (S202). The feature quantity extraction unit 102 then extracts a feature quantity X for registration from the biometric information for registration (S203).

When the feature quantity X for registration is extracted, the template generation unit 104 generates a template $T = F(X, P)$ by converting the feature quantity X using the parameter P and transmits the ID and the template T in a paired state to the template management server 120 (S204). The template management server 120 receives the pair of ID and template T from the registration terminal 100, then the DB control unit 122 registers the received pair of ID and template T in the template DB 121 (S205).

At the parameter management server 130, the DB control unit 132 registers the pair of ID received and parameter P generated, in step S201, from the registration terminal 100 in the template DB 131 (S206). Finally, the feature quantity extraction unit 102 of the registration terminal 100 deletes the feature quantity X and parameter P for registration from storage devices such as memory and an HDD (S207). Note that, unlike passwords, IDs need not be kept secret. For example, user names, mail addresses or employee numbers may be used as IDs.

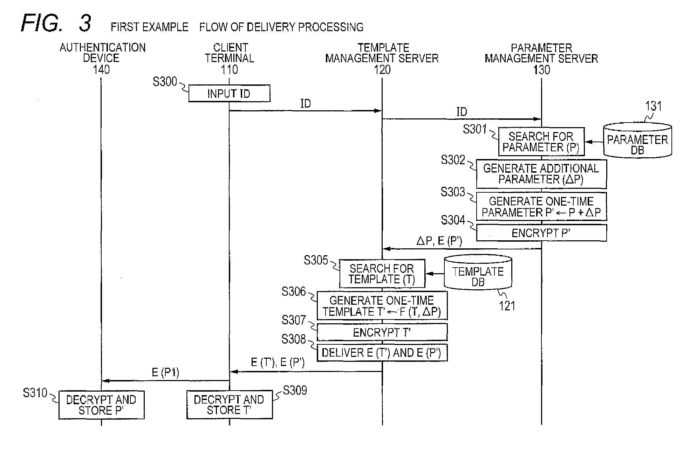

Next, the flow of delivery processing according to the present example will be described with reference to FIG. 3. This processing is performed, for example, when a user takes out with him/her a client terminal and/or an authentication device which are shared in an enterprise. Once this processing is performed, the user can perform, during an effective period (for example, a period preset for the user taking out the client terminal and/or the authentication device), authentication processing, being described later, even in an environment where network communication is not performable.

Referring to FIG. 3, when a user ID is inputted to the ID input unit 112 of the client terminal 110, the ID is transmitted as a delivery request to the template management server 120. The template management server 120 transmits the ID to the parameter management server 130 (S300).

The DB control unit 132 of the parameter management server 130 searches the parameter DB 131 for the parameter P using the ID as a key (S301). The parameter generation unit 133 randomly generates an additional parameter $\Delta P \in Sp$ (S302).

The parameter conversion unit 134 generates a one-time parameter $P' = P + \Delta P$ using the parameter P and the additional parameter $\Delta P$. The parameter conversion unit 134 also sets an effective period for the one-time parameter P' and includes the effective period information in the one-time parameter P' (S303).

The cryptographic processing unit 135 generates, by encrypting the one-time parameter P', an encrypted one-time parameter E (P') and transmits the encrypted one-time parameter E (P') and the additional parameter $\Delta P$ to the template management server 120 (S304).

The one-time parameter P' is encrypted such that it can be decrypted only by using a secret key Ks stored in the authentication device 140. For example, the secret key Ks stored in the parameter management server 130 may be shared with the authentication device 140 beforehand. Or, alternatively, a public key corresponding to the secret key Ks may be received from the authentication device 140 and the one-time parameter P' may be encrypted using the public key. At this time, a digital signature may be used for authentication.

The DB control unit 122 of the template management server 120 searches, using the ID as a key, the template DB 121 for the template T (S305). The template conversion unit 123 generates, by converting the template T using the additional parameter $\Delta P$, a one-time template T' = F(T, $\Delta P$). Furthermore, an effective period is set for the one-time template and the effective period information is included in the one-time template T' (S306).

The cryptographic processing unit 124 generates, by encrypting the one-time template T', an encrypted one-time template E (T') (S307) The one-time template T' is encrypted such that it can be decrypted only by using a secret key Kc stored in the client terminal 110. At this time, a digital signature may be used for authentication.

The delivery unit 125 of the template management server 120 then transmits the encrypted one-time template E(T') and the encrypted one-time parameter E(P') to the client terminal 110 (S308).

The client terminal 110 sends the encrypted one-time parameter E(P') to the authentication device 140, whereas the decryption unit 115 obtains, by decrypting the encrypted one-time template E(T') using the secret key Kc, the one-time template T' and stores the one-time template T' in the one-time template storage unit 113 (S309). Note that, since the client terminal 110 does not have the secret key Ks, the one-time parameter P' cannot be known at the client terminal 110. This prevents the original feature quantity X for registration from being restored by use of the one-time template T' and the one-time parameter P' by an illicit client terminal user.

At the authentication device 140, the decryption unit 144 obtains, by decrypting the encrypted one-time parameter E(P') using the secret key Ks, the one-time parameter P' and stores it in the one-time parameter storage unit 145 (S310).

As described above, according to the present embodiment, the one-time template T' and the one-time parameter P' can be safely delivered to the client terminal 110 and the authentication device 140, respectively. With the one-time template T' and the one-time parameter P' discretely managed, the risk of both of them leaking to allow the original feature quantity X for registration to be restored is reduced.

Thus, the template T and the parameter P themselves are not delivered. Instead, the one-time template T' and the one-time parameter P' generated by converting the template T and the parameter P using the randomly generated additional parameter $\Delta P$ are delivered to the client terminal 110 and the authentication device 140, respectively. In this way, should the one-time template T' and the one-time parameter P' leak, the leakage can be prevented from affecting other than the client terminal 110 and the authentication device 140.

Note that the encrypted one-time parameter E(P') may be, instead of having it transmitted to the authentication device 140 in step S308, stored in the client terminal 110. In such a case, in the flow of authentication processing being described in the following, processing steps are added to follow step S402 for validity verification so as to transmit the encrypted one-time parameter E(P') from the client terminal 110 to the authentication device 140 and have it decrypted by the authentication device 140 using the secret key Ks. In this way, the authentication device 140 is not required to have any writable non-volatile memory, so that a cost reduction is made possible. Also in this way, user authentication is performable using an optional authentication device. The authentication system can, therefore, be operated in a flexible manner. For example, a user going on a business trip can take out only a client terminal 110 and couple it to an authentication device 140 installed at a business trip destination.

Conversely, in step S308, the encrypted one-time template E(T') may also be transmitted to the authentication device 140 in addition to the encrypted one-time parameter E(P') to have both of them stored in the authentication device 140. In this case, in the flow of authentication processing being described in the following, processing steps are added to follow step S402 for validity verification so as to transmit the encrypted one-time template E(T') from the authentication device 140 to the client terminal 110 and have it decrypted at the client terminal 110 using the secret key Kc. In this way, a user having only an authentication device 140 can be authenticated at any client terminal 110.

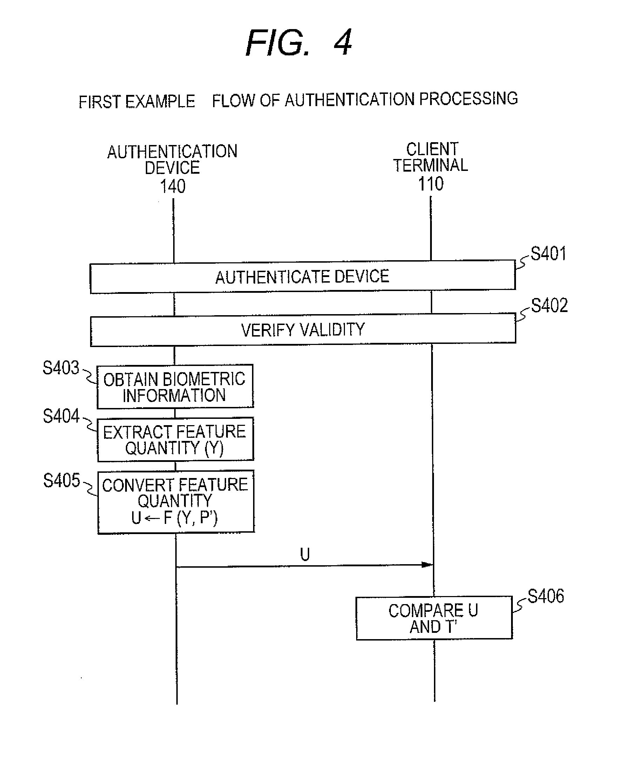

Next, the flow of authentication processing according to the present invention will be described with reference to FIG. 4. First, either one or both of the client terminal 110 and the authentication device 140 are authenticated (S401). This authentication can be performed using a general device authentication protocol in which a secret key or a public key is used. In this way, the risks of, for example, impersonation or information leakage by an illicit user using an illicit client terminal or an illicit authentication device can be reduced.

The client terminal 110 and/or the authentication device 140 determine/determines the validity of the one-time template T' and/or the one-time parameter P' and, if the one-time template T' and/or the one-time parameter P' are/is determined to be invalid, discontinues processing (S402). Alternatively, when the one-time template T' and/or the one-time parameter P' are/is determined to be invalid, the one-time template T' and/or the one-time parameter P' may be deleted. To determine the validity of the one-time template T' and/or the one-time parameter P', for example, whether the one-time template T' and/or the one-time parameter P' have/has not expired or have/has not been revoked by a delivery server is checked. Even in cases where the one-time template T' and/or the one-time parameter P' are/is determined to be still valid, if information leakage is suspected, the one-time template T' and/or the one-time parameter

**EP 2 579 221 A1**

P' may be invalidated. In such cases, a list of invalidated one-time templates T' and/or one-time parameters P' may be managed, for example, at a delivery server for delivery to the client terminal 110.

When the one-time template T' and/or the one-time parameter P' are/is determined to be valid in step S402, the sensor unit 141 of the authentication device 140 obtains the biometric information for user authentication (S403). The feature quantity extraction unit 142 then extracts a feature quantity Y for authentication from the biometric information for authentication (S404). Subsequently, the feature quantity conversion unit 143 generates, by converting the feature quantity Y for authentication using the one-time parameter P', a converted feature quantity U = F(Y, P') for authentication and transmits it to the client terminal 110 (S405). Finally, the client terminal 110 compares the converted feature quantity U for authentication with the one-time template T' and determines whether or not they match (S406).

As described above, in authentication processing according to the present embodiment, whether the one-time template T' and the one-time parameter P' are still valid is checked. Therefore, even in cases where the one-time template T' or the one-time parameter P' has been leaked, the effect of the leak is limited to within a preset effective period. Furthermore, even while the one-time template T' and the one-time parameter P' are still valid, they can be invalidated as required. This makes security control easier.

According to the present embodiment, cancelable biometrics can be realized involving no communication with a server via a network. Therefore, even in an off-line environment, authentication processing can be completed without requiring the original feature quantity X for registration to be restored. This makes it possible to largely reduce the risks of biometric information and feature quantity being leaked while maintaining the convenience of the biometric authentication system.

**Claims**

1. A biometric authentication system comprising:

a delivery server which stores a template generated by converting, using a predetermined parameter, a feature quantity of biometric information on a registered user and the parameter;
a client terminal which authenticates the user coupled to the delivery server via a network; and
an authentication device which is coupled to the client terminal and obtains, in authentication processing, biometric information on the user,
wherein the delivery server includes a parameter conversion unit which generates, by converting the parameter, a parameter for delivery, a template conversion unit which generates, by converting the template, a template for delivery, and a delivery unit which delivers the template for delivery and the parameter for delivery to one of the client terminal and the authentication device;
wherein the authentication device includes a sensor which obtains the biometric information on the user, a feature quantity obtaining unit which obtains a feature quantity from the biometric information, and a feature quantity conversion unit which generates, by converting the feature quantity using the parameter for delivery, a converted feature quantity; and
wherein the client terminal includes a match determination unit which determines, by comparing the converted feature quantity with the template for delivery, whether or not the converted feature quantity and the template for delivery match.

2. The biometric authentication system according to Claim 1, wherein the delivery server includes a template management server for managing the template and a parameter management server for managing the parameter.

3. The biometric authentication system according to Claim 1 or 2, comprising a registration terminal for registering the biometric information on the user,
wherein one of the delivery server and the parameter management server includes a parameter generation unit which generates the parameter upon receipt of a user registration request from the registration terminal and a server communication unit which transmits the generated parameter to the registration terminal, and
wherein the registration terminal includes a sensor which obtains biometric information on a registered user as biometric information for registration, a feature quantity extraction unit which extracts a feature quantity for registration from the biometric information for registration, a template generation unit which generates, by converting the feature quantity for registration using the parameter, the template, and a terminal communication unit which transmits the template to one of the delivery server and the template management server.

4. The biometric authentication system according to one of Claims 1 to 3,
wherein the parameter is delivered as the parameter for delivery, and

8

wherein the template is delivered as the template for delivery.

5. The biometric authentication system according to one of Claims 1 to 3, wherein one of the delivery server and the parameter management server includes a one-time parameter generation unit which generates, based on the parameter, a different one-time parameter every time delivery is required, wherein one of the delivery server and the template management server includes a one-time template generation unit which generates, based on the template, a different one-time template every time delivery is required, wherein the one-time parameter is delivered as the parameter for delivery, and wherein the one-time template is delivered as the template for delivery.

6. The biometric authentication system according to one of Claims 1 to 5, wherein one of the delivery server and the parameter management server includes a parameter encryption unit which encrypts the parameter for delivery such that the encrypted parameter for delivery can be decrypted only by the authentication device, and wherein the authentication device includes a parameter decryption unit which decrypts the parameter for delivery encrypted by one of the delivery server and the parameter management server.

7. The biometric authentication system according to one of Claims 1 to 5, wherein one of the delivery server and the template management server includes a template encryption unit which encrypts the template for delivery such that the encrypted template for delivery can be decrypted only by the client terminal, and wherein the client terminal includes a template decryption unit which decrypts the template for delivery encrypted by one of the delivery server and the template management server.

8. The biometric authentication system according to Claim 6 or 7, wherein the authentication device includes a parameter secret key storage unit which stores a parameter secret key for decrypting the parameter for delivery, wherein the client terminal stores the encrypted parameter for delivery delivered from one of the delivery server and the parameter management server and, when authenticating a user, transmits the encrypted parameter for delivery to the authentication device, and wherein the parameter decryption unit of the authentication device decrypts, using the parameter secret key, the parameter for delivery encrypted by the parameter encryption unit.

9. The biometric authentication system according to Claim 7 or 8, wherein the client terminal includes a template secret key storage unit which stores a template secret key for decrypting the template for delivery, wherein the authentication device stores the encrypted parameter for delivery delivered from one of the delivery server and the template management server and the encrypted template for delivery delivered from one of the delivery server and the parameter management server and, when authenticating a user, transmits the encrypted template for delivery to the client terminal, and wherein the template decryption unit of the client terminal decrypts, using the template secret key, the encrypted template for delivery.

10. The biometric authentication system according to one of Claims 6 to 9, wherein the authentication device has a parameter secret key storage unit which stores a parameter secret key for decrypting the parameter for delivery, a parameter storage unit storing the parameter for delivery, the parameter decryption unit which decrypts, using the parameter secret key, the parameter for delivery and the feature quantity conversion unit all provided in a tamper-resistant area.

11. A biometric authentication method used in a biometric authentication system having a delivery server which stores a template generated by converting, using a predetermined parameter, a feature quantity of biometric information on a registered user and the parameter, a client terminal which authenticates the user coupled to the delivery server via a network, and an authentication device which is coupled to the client terminal and obtains, in authentication processing, the biometric information on the user, the method comprising:

a parameter conversion step of generating, by converting the parameter, a parameter for delivery;
a template conversion step of generating, by converting the template, a template for delivery;
a delivery step of delivering the template for delivery and the parameter for delivery to one of the client terminal and the authentication device;

a feature quantity obtaining step of obtaining a feature quantity from the biometric information obtained from a sensor for obtaining the biometric information on the user;

a feature quantity conversion step of generating, by converting the feature quantity using the parameter for delivery, a converted feature quantity; and

a match determination step of determining, by comparing the converted feature quantity with the template for delivery, whether or not the converted feature quantity and the template for delivery match.

12. The biometric authentication method according to claim 11, wherein the biometric authentication system includes a registration terminal for registering the biometric information on the user, the method comprising:

a parameter generation step of generating the parameter upon receipt of a user registration request from the registration terminal;

a server communication step of transmitting the generated parameter to the registration terminal;

a feature quantity extraction step of extracting a feature quantity for registration from biometric information on a registered user obtained, as biometric information for registration, from the sensor;

a template generation step of generating the template by converting the feature quantity for registration using the parameter; and

a terminal communication step of transmitting the template to one of the delivery server and a template management server managing the template.

13. The biometric authentication method according to claim 11 or 12, the method comprising:

a one-time parameter generation step of generating, based on the parameter, a different one-time parameter every time delivery is required; and

a one-time template generation step of generating, based on the template, a different one-time template every time delivery is required,

wherein the one-time parameter is delivered as the parameter for delivery, and

wherein the one-time template is delivered as the template for delivery.

14. The biometric authentication method according to one of Claims 11 to 13, comprising:

a parameter encryption step of encrypting the parameter for delivery such that the encrypted parameter for delivery can be decrypted only by the authentication device; and

a parameter decryption step of decrypting the parameter for delivery encrypted by one of the delivery server and a parameter management server managing the parameter.

15. The biometric authentication method according to one of Claims 11 to 14, comprising:

a template encryption step of encrypting the template for delivery such that the encrypted template for delivery can be decrypted only by the client terminal; and

a template decryption step of decrypting the template for delivery encrypted by one of the delivery server and a template management server managing the template.

*FIG. 1*  FIRST EXAMPLE  SYSTEM CONFIGURATION

130 — PARAMETER MANAGEMENT SERVER

PARAMETER DB

| ID | PARAMETER P | ~131 |
|----|-------------|------|
| ... | ... | |
| ... | ... | |

DB CONTROL UNIT ~132

PARAMETER GENERATION UNIT ~133

PARAMETER CONVERSION UNIT ~134

CRYPTOGRAPHIC PROCESSING UNIT ~135

101 — SENSOR DEVICE FOR REGISTRATION

100 — REGISTRATION TERMINAL

FEATURE QUANTITY EXTRACTION UNIT ~102

ID INPUT UNIT ~103

TEMPLATE GENERATION UNIT ~104

ID ISSUING UNIT ~105

150

110

120 — TEMPLATE MANAGEMENT SERVER

TEMPLATE DB

| ID | TEMPLATE T | ~121 |
|----|------------|------|
| ... | ... | |
| ... | ... | |

122 — DB CONTROL UNIT

123 — TEMPLATE CONVERSION UNIT

124 — CRYPTOGRAPHIC PROCESSING UNIT

125 — DELIVERY UNIT

CLIENT TERMINAL

111 — ID INPUT UNIT

112 — MATCH DETERMINATION UNIT

115 — DECRYPTION UNIT

113 — ONE-TIME TEMPLATE STORAGE UNIT
TEMPLATE T

114 — SECRET KEY STORAGE UNIT
SECRET KEY Kc

140

AUTHENTICATION DEVICE

SENSOR UNIT ~141

FEATURE QUANTITY EXTRACTION UNIT ~142

FEATURE QUANTITY CONVERSION UNIT ~143

DECRYPTION UNIT ~144

ONE-TIME PARAMETER STORAGE UNIT ~145
PARAMETER P

SECRET KEY STORAGE UNIT ~146
SECRET KEY Ks

11

*FIG. 2*   FLOW OF REGISTRATION PROCESSING

REGISTRATION
TERMINAL
100

PARAMETER
MANAGEMENT SERVER
130

TEMPLATE
MANAGEMENT SERVER
120

| INPUT ID | S200

ID →

GENERATE
PARAMETER (P)   S201

← PARAMETER P

OBTAIN BIOMETRIC
INFORMATION   S202

EXTRACT FEATURE
QUANTITY (X)   S203

CONVERT FEATURE
QUANTITY
$T \leftarrow F(X, P)$   S204

ID, TEMPLATE T →

S205

REGISTER
TEMPLATE → TEMPLATE
DB   121

S206

REGISTER
PARAMETER → PARAMETER
DB   131

DELETE X AND P   S207

EP 2 579 221 A1

FIG. 3   FIRST EXAMPLE   FLOW OF DELIVERY PROCESSING

AUTHENTICATION DEVICE 140 ... CLIENT TERMINAL 110 ... TEMPLATE MANAGEMENT SERVER 120 ... PARAMETER MANAGEMENT SERVER 130

S300 INPUT ID

ID → ID →

131 PARAMETER DB

S301 SEARCH FOR PARAMETER (P)

S302 GENERATE ADDITIONAL PARAMETER (ΔP)

S303 GENERATE ONE-TIME PARAMETER P' ← P + ΔP

S304 ENCRYPT P'

ΔP, E (P')

S305 SEARCH FOR TEMPLATE (T)   TEMPLATE DB 121

S306 GENERATE ONE-TIME TEMPLATE T' ← F (T, ΔP)

S307 ENCRYPT T'

S308 DELIVER E (T') AND E (P')

E (T'), E (P')

E (P1)

S310 DECRYPT AND STORE P'   S309 DECRYPT AND STORE T'

13

# FIG. 4

FIRST EXAMPLE   FLOW OF AUTHENTICATION PROCESSING

AUTHENTICATION
DEVICE
140

CLIENT
TERMINAL
110

| AUTHENTICATE DEVICE | S401 |

| VERIFY VALIDITY | S402 |

S403 — OBTAIN BIOMETRIC
INFORMATION

S404 — EXTRACT FEATURE
QUANTITY (Y)

S405 — CONVERT FEATURE
QUANTITY
$U \leftarrow F(Y, P')$

U

COMPARE U
AND T'   S406

# FIG. 5

HARDWARE CONFIGURATION (TERMINAL / SERVER)

500

CPU

501

RAM

502

HDD

503

INPUT DEVICE

504

OUTPUT DEVICE

505

COMMUNICATION DEVICE

# FIG. 6

HARDWARE CONFIGURATION (AUTHENTICATION DEVICE)

600

CPU

601

RAM

602

NON-VOLATILE MEMORY

603

SENSOR

604

COMMUNICATION DEVICE

Europäisches
Patentamt

European
Patent Office

Office européen
des brevets

**EUROPEAN SEARCH REPORT**

Application Number

EP 12 18 0425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 360 615 A1 (HITACHI LTD [JP]) 24 August 2011 (2011-08-24)<br>* abstract *<br>* paragraph [0010] - paragraph [0020] *<br>* paragraph [0022] - paragraph [0068] *<br>* figure 1 *<br>----- | 1-15 | INV.<br>G07C9/00<br>H04L9/32<br>G06F21/32 |
| A | US 2009/113209 A1 (LEE YONG JIN [KR] ET AL) 30 April 2009 (2009-04-30)<br>* abstract *<br>* paragraph [0010] - paragraph [0014] *<br>----- | 1-15 | |
| A | US 2004/250085 A1 (TATTAN OLIVER [IE] ET AL) 9 December 2004 (2004-12-09)<br>* abstract *<br>* paragraph [0102] - paragraph [0115] *<br>* paragraph [0246] - paragraph [0267] *<br>----- | 1-15 | |
| A | US 2004/019570 A1 (BOLLE RUDOLF MAARTEN [US] ET AL) 29 January 2004 (2004-01-29)<br>* abstract *<br>* paragraph [0044] *<br>* paragraph [0110] - paragraph [0117] *<br>----- | 1-15 | TECHNICAL FIELDS SEARCHED (IPC)<br><br>G07C<br>H04L<br>G06F |

The present search report has been drawn up for all claims

| Place of search | Date of completion of the search | Examiner |
|---|---|---|
| The Hague | 20 December 2012 | Teutloff, Ivo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 18 0425

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2012

| Patent document cited in search report | | Publication date | Patent family member(s) | | Publication date |
|---|---|---|---|---|---|
| EP 2360615 | A1 | 24-08-2011 | CN | 102132288 A | 20-07-2011 |
| | | | EP | 2360615 A1 | 24-08-2011 |
| | | | JP | 2010146245 A | 01-07-2010 |
| | | | KR | 20110033281 A | 30-03-2011 |
| | | | US | 2012005736 A1 | 05-01-2012 |
| | | | WO | 2010070787 A1 | 24-06-2010 |
| US 2009113209 | A1 | 30-04-2009 | NONE | | |
| US 2004250085 | A1 | 09-12-2004 | CA | 2451491 A1 | 30-01-2003 |
| | | | US | 2004250085 A1 | 09-12-2004 |
| | | | WO | 03009111 A2 | 30-01-2003 |
| US 2004019570 | A1 | 29-01-2004 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010146245 A
- US 6836554 B
- JP 2006158851 A

### Non-patent literature cited in the description

- **M. BRAITHWAITE ; U. CAHN VON SEELEN ; J. CAMBIER ; J. DAUGMAN ; R. GLASS ; R. MOORE ; I. SCOTT.** Application-specific biometric templates. *Auto ID02,* 2002, 167-171
- **HARUKI OTA ; SHINSAKU KIYOMOTO ; TOSHIAKI TANAKA.** Proposal of an Iris Identification Scheme Hiding Iris Codes. *Journal of Information Processing Society of Japan,* 2004, vol. 45 (8), 1845-1855
- **SHINJI HIRATA et al.** A Proposal of Cancelable Biometrics for Image Matching based biometrics. *Technical report of Institute of Electronics, Information and Communication Engineers (IEICE,* July 2006